# EUROPÄISCHE PATENTSCHRIFT

(11) **EP 3 550 150 B1**
(45) Veröffentlichungstag und Bekanntmachung des Hinweises auf die Patenterteilung: **28.06.2023**
(21) Anmeldenummer: 19177167.4
(22) Anmeldetag: 03.03.2015
(51) Int. Cl.: F04D 19/04, F04D 29/058, F04D 29/66, G01M 1/16, F16C 32/04, G01M 1/30, H01F 41/02, F04D 27/02, H01F 13/00

(54) **VERFAHREN ZUM WUCHTEN EINES ROTORS EINER VAKUUMPUMPE ODER EINES ROTORS EINER ROTATIONSEINHEIT FÜR EINE VAKUUMPUMPE**
METHOD FOR BALANCING A ROTOR OF A VACUUM PUMP OR A ROTOR OF A ROTARY UNIT FOR A VACUUM PUMP
PROCÉDÉ D'EQUILIBRAGE D'UN ROTOR D'UNE POMPE À VIDE OU D'UN ROTOR D'UNE UNITÉ DE ROTATION POUR UNE POMPE À VIDE

(30) Priorität: 07.03.2014 DE 102014103060
(43) Veröffentlichungstag der Anmeldung: 09.10.2019
(62) Teilanmeldung aus: 15157282.3
(73) Patentinhaber: PFEIFFER VACUUM GMBH, 35614 Asslar (DE)
(72) Erfinder: WIRTH, Adrian, 35582 Wetzlar (DE); RIPPL, Andreas, 35578 Wetzlar (DE)
(74) Vertreter: Manitz Finsterwald Patent- und Rechtsanwaltspartnerschaft mbB

(56) Entgegenhaltungen:
- EP-A1- 1 273 802
- EP-A2- 1 273 803
- EP-A2- 2 520 807
- DE-A1- 10 034 427
- JP-A- H04 262 220
- JP-A- 2006 022 771
- JP-A- 2011 112 514
- JP-A- 2011 144 713

## Beschreibung

Die vorliegende Erfindung betrifft ein Verfahren zum Wuchten eines Rotors einer Vakuumpumpe, insbesondere Turbomolekularpumpe, oder eines Rotors einer Rotationseinheit für eine Vakuumpumpe, insbesondere Turbomolekularpumpe, wobei der Rotor mittels wenigstens eines Magnetlagers, insbesondere eines Permanentmagnetlagers, gegenüber einem Stator der Vakuumpumpe oder der Rotationseinheit um eine Drehachse drehbar gelagert ist.

Vakuumpumpen spielen in der Vakuumtechnik eine wichtige Rolle und werden in den unterschiedlichsten technischen Anwendungen zum Absaugen von vornehmlich gasförmigen Medien und zur Evakuierung von Hohlräumen eingesetzt. Dabei kommen unter anderem Turbomolekularpumpen zum Einsatz, welche im molekularen, d.h. nicht-viskosen, Bereich arbeiten und dazu geeignet sind, ein Vakuum mit einer sehr hohen Reinheit zu erzeugen. Turbomolekularpumpen umfassen üblicherweise eine Rotationseinheit, die aus einem Stator und einem gegenüber dem Stator drehbaren Rotor besteht, wobei der Rotor zur Erzeugung des hochreinen Vakuums mit üblicherweise sehr hohen Drehzahlen drehend angetrieben wird.

Bei diesen sehr hohen Drehzahlen kommt einer möglichst reibungsfreien Lagerung des Rotors gegenüber dem Stator eine besondere Bedeutung zu. Diese Lagerung wird üblicherweise durch zwei Lager erreicht, die ein im Bereich der Saugöffnung, d.h. der Hochvakuumseite der Pumpe, angeordnetes Lager und ein in der Nähe der Gasaustrittsöffnung, d.h. der so genannten Vorvakuumseite der Pumpe, angeordnetes Lager umfassen. Da das an der Hochvakuumseite vorgesehene Lager mit dem zu evakuierenden Volumen in Verbindung steht, muss dieses Lager möglichst verschmutzungsfrei ausgeführt sein, um eine Verschmutzung des zu evakuierenden Volumens bzw. der darin enthaltenen Medien, insbesondere durch Schmieröl, zu verhindern.

Um die Anforderungen an eine möglichst reibungsarme und gleichzeitig verschmutzungsfreie Lagerung zu erfüllen, ist es bekannt, das an der Hochvakuumseite vorgesehene Lager als Magnetlager und insbesondere als Permanentmagnetlager auszuführen, welches beispielsweise einen an dem Stator angebrachten Magnetringstapel und einen an dem Rotor angebrachten Magnetringstapel umfassen kann, die ineinander angeordnet sind und durch ihre gegenseitige magnetische Abstoßung eine drehbare radiale Lagerung gewährleisten.

Bei der Herstellung einer Vakuumpumpen bzw. einer Rotationseinheit weist der Rotor normalerweise eine Unwucht auf, die nicht nur Vibrationen hervorrufen kann, sondern auch zu einer Beschädigung des Rotors bzw. der Lager und/oder des Stators führen kann. Der Rotor muss daher gewuchtet werden, bevor die Vakuumpumpe bzw. Rotationseinheit bestimmungsgemäß eingesetzt werden kann.

Aus der EP 1 273 803 A2 sind ein Verfahren mit den Merkmalen gemäß dem Oberbegriff des Anspruchs 1 und eine Vakuumpumpe mit den Merkmalen gemäß dem Oberbegriff des Anspruchs 9 bekannt. Aus der EP 2520807 A2 ist ein weiteres Wuchtverfahren bekannt.

Der vorliegenden Erfindung liegt daher die Aufgabe zugrunde, ein Verfahren zum Wuchten eines Rotors einer Vakuumpumpe oder eines Rotors einer Rotationseinheit für eine Vakuumpumpe bereitzustellen, mittels dem eine Unwucht des Rotors möglichst vollständig beseitigt werden kann. Der vorliegenden Erfindung liegt ferner die Aufgabe zugrunde, eine Vakuumpumpe, insbesondere Turbomolekularpumpe, oder Rotationseinheit für eine Vakuumpumpe, insbesondere für eine Turbomolekularpumpe, bereitzustellen, bei der der Rotor möglichst vollständig gewuchtet ist.

Die Aufgabe wird durch ein Verfahren und durch eine Vakuumpumpe mit den Merkmalen der unabhängigen Ansprüche gelöst. Bevorzugte Ausführungsformen und Weiterbildungen der Erfindung sind in den abhängigen Ansprüchen beschrieben.

Erfindungsgemäß wird ein Verfahren zum Wuchten eines Rotors einer Vakuumpumpe oder eines Rotors einer Rotationseinheit für eine Vakuumpumpe offenbart, wobei der Rotor mittels wenigstens eines Magnetlagers, insbesondere eines Permanentmagnetlagers, gegenüber einem Stator der Vakuumpumpe oder der Rotationseinheit um eine Drehachse drehbar gelagert ist.

Bei dem erfindungsgemäßen Verfahren wird eine Unwucht des Rotors in wenigstens einer Ebene außerhalb der Ebene des Magnetlagers gemessen und die Unwucht wird durch Abtragen von Material von dem Rotor in der Ebene außerhalb der Magnetlagerebene zumindest annähernd beseitigt. Durch Materialabtragung bzw. Materialablation wird die Unwucht des Rotors auf einfache Weise vermindert oder eventuell sogar vollständig beseitigt.

Das Material wird mittels Laserstrahlung abgetragen. Dadurch erfolgt auf einfache Weise eine lokale Materialablation.

Bevorzugt erfolgt das Abtragen des Materials während sich der Rotor dreht, insbesondere während oder im Nachgang zu der Messung der Unwucht. Der zum Beispiel zur Messung der Unwucht in Rotation versetzte Rotor muss somit nicht zum Abtragen des Materials zum Stillstand gebracht werden. Die Zeitdauer, die zum Auswuchten des Rotors in der Ebene außerhalb der Magnetlageebene erforderlich ist, kann somit verkürzt werden.

Bei sich drehendem Rotor erfolgt die Ablation bevorzugt mittels hochintensiver, gepulster Laserstrahlung, da damit in kurzer Zeit eine lokale Abtragung von Rotormaterial realisiert werden kann.

Gemäß einer Ausführungsform kann das Verfahren ferner die Schritte umfassen: Messen einer Unwucht des Rotors in der Ebene des Magnetlagers, und Verstellen der Lage der Drehachse in Abhängigkeit von der Unwucht, um den Rotor zu wuchten.

Dieser Ausführungsform liegt somit der Gedanke zugrunde, den Rotor zu wuchten, indem die Lage der Drehachse verstellt wird. Im Gegensatz zu der aus dem Stand der Technik bekannten Verwendung von Wuchtgewichten, durch die die Massenverteilung am Rotor verändern werden kann, handelt es sich bei diesem Wuchtverfahren somit um ein konzeptionell anderes Wuchtverfahren, da diesem der Gedanke zugrunde liegt, den Rotor durch Verstellen der Lage seiner Drehachse zu wuchten.

Vorteilhaft an diesem Verfahren ist insbesondere, dass der Rotor zumindest in der Ebene des Magnetlagers durch Verstellen der Lage der Drehachse gewuchtet werden kann. Somit können Wuchtschrauben, die bei aus dem Stand der Technik bekannten Wuchtverfahren zum Einsatz kommen, zumindest im Bereich der Ebene des Magnetlagers eingespart werden. Dadurch entfallen auch intrinsische Kräfte auf den Rotor, die Wuchtschrauben bei schnell drehenden Rotoren aufgrund der Wirkung der Zentrifugalkraft auf den Rotor ausüben können. Derartige Zentrifugalkräfte können, insbesondere bei schnell drehenden Rotoren, auch zu einer Beschädigung des Rotors führen. Da bei dem vorliegenden Wuchtverfahren keine Wuchtschrauben benötigt werden, kann daher die Langlebigkeit des Rotors bzw. der Vakuumpumpe oder der Rotationseinheit verbessert werden. Eine Qualitätssteigerung wird somit erreicht.

Bevorzugt wird die Lage der Drehachse derart verstellt, dass die Drehachse wenigstens in der Magnetlagerebene zumindest annähernd in Deckung gebracht wird mit der Hauptträgheitsachse des Rotors. Der Rotor rotiert nach dem Wuchten somit wenigstens in der Magnetlagerebene im Wesentlichen um seine Hauptträgheitsachse und läuft daher - zumindest in der Magnetlagerebene - weitgehend frei von einer Unwucht.

Die ursprüngliche Lage der Drehachse, also die Lage vor dem Verstellen der Drehachse ergibt sich aus der gegenseitigen Lagerung von Rotor und Stator in dem Magnetlager, insbesondere auch aufgrund der durch das Magnetlager ausgeübten Lagerkräfte bzw. einer normalerweise nicht perfekt rotationssymmetrischen Verteilung der von dem statorseitigen Teil und/oder dem rotorseitigen Teil des Magnetlagers jeweils erzeugten Magnetfeldverteilung. Die ursprüngliche Lage der Drehachse weicht normalerweise von der Lage der Hauptträgheitsachse im Bereich der Magnetlagerebene ab, so dass der Rotor ursprünglich, also vor dem Wuchten, eine Unwucht aufweist.

Als Hauptträgheitsachse des Rotors wird dabei diejenige Trägheitsachse verstanden, die sich im Wesentlichen in Richtung der Längsachse des Rotors erstreckt und dabei durch den Schwerpunkt des Rotors verläuft. Eine Unwucht des Rotors kann durch Verstellen der Lage der Drehachse derart, dass die Drehachse wenigstens im Bereich der Magnetlagerebene zumindest weitgehend mit der Hauptträgheitsachse zusammenfällt, zumindest weitgehend beseitigt werden.

Vorteilhaft ist es, wenn die Lage der Drehachse derart verstellt wird, dass die Unwucht verringert wird, wobei bevorzugt die Drehachse in eine optimale Lage gebracht wird, in der die verbleibende Unwucht des Rotors minimiert ist. Der Rotor kann somit so verstellt werden, dass er optimal ausgewuchtet und eine eventuell verbleibende Restunwucht minimiert ist. Dabei kann die optimale Lage derjenigen Lage der Drehachse entsprechen, bei der wenigstens im Bereich der Magnetlagerebene die Drehachse mit der Hauptträgheitsachse des Rotors im Wesentlichen zusam menfäl lt.

Nach einer bevorzugten Ausgestaltung des Verfahrens wird eine optimale Lage für die Drehachse, bei der die Unwucht des Rotors minimal ist, bestimmt, insbesondere mittels eines Wuchtalgorithmus, und die Drehachse wird anschließend in die optimale Lage gebracht. Durch Verstellen der Lage der Rotordrehachse in die optimale Lage kann somit eine ursprüngliche Unwucht des Rotors minimiert oder eventuell sogar beseitigt werden.

Bevorzugt wird die Lage der Drehachse durch Verändern des Magnetlagers, insbesondere hinsichtlich seiner Form und/oder seiner materialspezifischen permanentmagnetischen Eigenschaften, in Abhängigkeit von der Lage der Drehachse und/oder der Lage der Hauptträgheitsachse in der Magnetlagerebene verstellt.

Durch Verändern der Form des Magnetlagers, zum Beispiel durch Entfernen von Material von dem Magnetlager, kann die Magnetfeldverteilung zwischen dem statorseitigen Teil und dem rotorseitigen Teil des Magnetlagers verändert und die Lage der Drehachse somit verstellt werden. Die materialspezifischen magnetischen Eigenschaften des Magnetlagers können zum Beispiel durch eine wenigstens lokale Entmagnetisierung des Permanentmagnetlagers erreicht werden. Insbesondere kann durch eine lokale Entmagnetisierung die Magnetfeldverteilung zwischen dem statorseitigen Teil und dem rotorseitigen Teil des Magnetlagers in kontrollierter Weise verändert und die Lage der Drehachse des Rotors in einer gewünschten Weise verstellt werden. Unter lokaler Entmagnetisierung wird dabei auch nur eine teilweise Entmagnetisierung verstanden, d.h. eine Art Magnetisierungsverringerung.

Das Magnetlager kann in Abhängigkeit von einer Abweichung der Lage der Drehachse von der Lage der Hauptträgheitsachse verändert werden, insbesondere hinsichtlich seiner Form und/oder seiner materialspezifischen magnetischen Eigenschaften.

Zum Verstellen der Lage der Drehachse kann die Abweichung der ursprünglichen Lage der Drehachse von der Lage der Hauptträgheitsachse im Bereich der Magnetlagerebene bestimmt werden. Anhand der so bestimmten Abweichung kann dann ermittelt werden, wie das Magnetlager, zum Beispiel hinsichtlich seiner Form durch Materialabtrag und/oder hinsichtlich seiner materialspezifischen magnetischen Eigenschaften, also zum Beispiel durch eine lokale Entmagnetisierung, verändert werden muss, um die Drehachse so zu verstellen, dass sie sich in der Magnetlagerebene wenigstens annähernd mit der Hauptträgheitsachse des Rotors deckt bzw. dass sie in die optimale Lage gelangt, bei der die verbleibende Unwucht minimal oder im Idealfall sogar ganz beseitigt ist.

Vorzugsweise wird die Abweichung nach Betrag und Richtung bestimmt. Anhand einer nach Betrag und Richtung bestimmten Abweichung der Lage der Drehachse von der Lage der Hauptträgheitsachse kann verhältnismäßig einfach ermittelt werden, wie das Magnetlager hinsichtlich seiner Form und/oder hinsichtlich seiner materialspezifischen permanentmagnetischen Eigenschaften verändert werden muss, um die Drehachse im Bereich der Magnetlagerebene weitgehend in Deckung zu bringen mit der Hauptträgheitsachse bzw. um die Drehachse in die optimale Lage zu bringen.

Zum Verstellen der Lage der Drehachse wird bevorzugt von wenigstens einem Permanentmagneten des Magnetlagers Material entfernt, insbesondere durch ein spanabhebendes Verfahren, welches vorzugsweise aus der Gruppe Schleifen, Bohren, Fräsen und Drehen ausgewählt ist.

Durch gezieltes Entfernen von Material von dem Permanentmagnetlager kann in einfacher Weise die Magnetfeldverteilung zwischen dem rotorseitigen und dem statorseitigen Teil des Magnetlagers gezielt verändert und die Lage der Drehachse in einer gewünschten Weise verstellt werden.

Nach einer bevorzugten Weiterbildung der Erfindung wird zum Verstellen der Lage der Drehachse wenigstens ein Permanentmagnet des Magnetlagers zumindest in einem Bereich wenigstens teilweise entmagnetisiert.

Durch eine lokale, wenigstens teilweise Entmagnetisierung des Permanentmagnetlagers kann die Magnetfeldverteilung zwischen dem statorseitigen Teil und dem rotorseitigen Teil des Magnetlagers ebenfalls verändert und somit die Lage der Drehachse relativ zur Hauptträgheitsachse verstellt werden.

Durch eine lokale, wenigstens teilweise Entmagnetisierung des Permanentmagnetlagers kann ferner ein Drehmoment im Magnetlager bewirkt werden, wobei bevorzugt mittels des Drehmoments ein bereits vorhandenes Moment und/oder eine dynamische Unwucht des Rotors verringert oder kompensiert werden kann.

Vorteilhaft ist es, wenn der Bereich durch Erwärmen auf eine Temperatur, oberhalb der der Permanentmagnet im Bereich der Erwärmung zumindest teilweise seine magnetischen Eigenschaften dauerhaft verliert, entmagnetisiert wird. Auf diese Weise kann besonders einfach eine teilweise Entmagnetisierung des Permanentmagnetbereichs erreicht werden.

Die Veränderung des Magnetlagers kann dabei prinzipiell an dem rotorseitigen Teil des Magnetlagers, an dem statorseitigen Teil des Magnetlagers oder sowohl an dem rotorseitigen Teil als auch an dem statorseitigen Teil des Magnetlagers vorgenommen werden.

Nach einer bevorzugten Ausgestaltung des erfindungsgemäßen Verfahrens wird der Bereich durch Bestrahlen mit Laserstrahlung erwärmt.

Bei der Verwendung von Laserstrahlung lässt sich die örtliche Verteilung und die Temperatur der Erwärmung besonders gezielt einstellen und genau steuern, so dass eine besonders präzise Verstellung der Lage der Drehachse erreicht werden kann. Die Lage der Drehachse kann damit durch lokales Bestrahlen des statorseitigen und/oder rotorseitigen Teils des Magnetlagers mit Laserstrahlung verstellt werden, so dass die Drehachse gezielt in eine gewünschte Lage gebracht werden kann.

Zur Bestimmung der Lasereinstrahlung, insbesondere hinsichtlich der Anzahl an Strahlungseinheiten, der Strahlungsdosis und/oder der Position der zu erwärmenden Bereiche des Magnetlagers, kann genauso vorgegangen werden wie bei gängigen Wuchtverfahren, bei denen durch sogenannte Einflusszahlen die Reaktion des Rotors auf ein eingeschraubtes Probegewicht ermittelt und als Referenz für einen Wuchtprozess herangezogen wird. Die Einflusszahlen können das Verhalten des Rotors auf ein Wuchtgewicht beschreiben. Ein solches Vorgehen ist vorteilhaft, wenn ein physikalisches Modell der Rotordynamik nicht vorliegt. Der Zusammenhang zwischen Einwirkung eines Testwuchtgewichtes und der verbundenen Reaktion des Rotors kann in Form von Einflusszahlen beschrieben und in der Praxis meist empirisch ermittelt werden.

Ein entsprechendes Vorgehen kann für die Bestimmung der Lasereinstrahlung verwenden werden. Dabei können die Lasereinflusszahlen durch Einstrahlung von Test-Laserdosen in das Magnetlager ermittelt werden. Die auf diese Weise ermittelten Einflusszahlen können sodann herangezogen werden, um einen gewissen Unwuchtzustand zu kompensieren. Je größer die gesammelte Datenmenge der durch die Lasereinstrahlung erzeugten Unwuchtveränderungen ist, desto genauer kann der Wert der Lasereinflusszahlen ermittelt werden. Selbstverständlich müssen derartige Lasereinflusszahlen für jeden Rotortyp gesondert empirisch ermittelt werden.

Vorzugsweise kommt ein Wuchtalgorithmus zum Einsatz, bei welchem die Einflusszahlen nicht das Einschrauben von Gewichten beschreiben, sondern auf die Lasereinstrahlung bezogen sind. Bevorzugt handelt es sich um einen selbstlernenden Wuchtalgorithmus, der selbstständig, insbesondere evolutionär, die Reaktionen eines Rotors, insbesondere bzgl. einer Änderung des Wuchtzustands, auf eine erfolgte Lasereinstrahlung erlernt und optimiert und bei einem nächsten zu wuchtenden Rotor anwendet und diesen mit den erzielten Reaktionen erneut optimiert.

Die Lage der Drehachse und/oder die Lage der Hauptträgheitsachse in der Magnetlagerebene können vor dem Verstellen bestimmt werden. Die Lage der Drehachse bzw. die Lage der Hauptträgheitsachse können gemessen und/oder anhand der gemessenen Unwucht bestimmt werden.

Zum Verstellen der Lage der Drehachse kann das Magnetfeldlager, insbesondere zusätzlich zu den vorstehend genannten Maßnahmen, mit vorzugsweise elektrischen Ausgleichsmagneten versehen werden, es kann eine gezielte Stapelung oder Auswahl der Permanentmagnete des Magnetlagers erfolgen, es kann eine geometrische Reorientierung des Magnetlagers und/oder eines oder mehrerer Magnetringe des Magnetlagers erfolgen, und/oder es kann magnetisches Material, insbesondere weichmagnetisches Material, lokal in oder am Magnetlager angeordnet werden.

Bei realen Rotoren kann außerdem die Hauptträgheitsache drehzahlabhängig sein, da sich zum Beispiel Rotorschaufeln unter Fliehkrafteinwirkung ungleichmäßig verbiegen und dadurch der Unwuchtzustand dynamisch ist. In der Realität wird diesem Effekt anhand von wuchtdrehzahlabhängigen Einflusszahlen Rechnung getragen. Das erfindungsgemäße Verfahren schließt einen solchen dynamischen Rotor in der Anwendbarkeit nicht aus.

Eine Unwucht des Rotors kann auch in an sich bekannter Weise durch Einschrauben von, insbesondere kleinen, Wuchtgewichten vermindert oder beseitigt werden. Beispielsweise kann eine nach einer erfolgten Ablation noch vorhandene Restunwucht mit Wuchtgewichten weiter vermindert oder eventuell sogar vollständig beseitigt werden.

Mittels Lasereinstrahlung können bei einem Magneten, insbesondere einem Antriebsmagneten, auch unterschiedlich stark ausgeprägte Polamplituden und/oder Polgeometrien ausgeglichen werden. Ähnlich der Wirkung von Magnetfeldinhomogenitäten eines Magnetlagers können intrinsische Symmetriestörungen eines Magneten periodische, anregende Kräfte auf den Rotor ausüben, welche in gleicher Weise das Vibrationsniveau erhöhen und zu einer stärkeren Lagerbelastung führen. Derartige Kräfte können mittels Lasereinstrahlung ebenfalls vermindert oder beseitigt werden.

Bevorzugt wird das erfindungsgemäße Verfahren an einer Turbomolekularpumpe bzw. einer Rotationseinheit für eine Turbomolekularpumpe durchgeführt.

Die Erfindung betrifft auch eine Vakuumpumpe, insbesondere Turbomolekularpumpe, oder eine Rotationseinheit für eine Vakuumpumpe, insbesondere für eine Turbomolekularpumpe, die gemäß dem erfindungsgemäßen Verfahren erhalten werden können oder erhältlich sind.

Außerdem betrifft die Erfindung eine Vakuumpumpe, insbesondere Turbomolekularpumpe, oder Rotationseinheit für eine Vakuumpumpe, insbesondere für eine Turbomolekularpumpe, umfassend einen Rotor, der mittels wenigstens eines Magnetlagers, insbesondere eines Permanentmagnetlagers, gegenüber einem Stator der Vakuumpumpe oder der Rotationseinheit um eine Drehachse drehbar gelagert ist, und bei der die Drehachse derart verstellt wurde, dass die Unwucht des Rotors vermindert, insbesondere minimiert, ist und/oder dass sie wenigstens in der Ebene des Magnetlagers zumindest annähernd in Deckung gebracht ist mit der Hauptträgheitsachse des Rotors.

Zusätzlich ist eine Unwucht des Rotors in wenigstens einer Ebene außerhalb der Ebene des Magnetlagers durch Abtragung von Material von dem Rotor mittels Laserstrahlung zumindest annähernd beseitigt.

Ferner ist von dem Magnetlager, insbesondere von wenigstens einem Rotorring und/oder wenigstens einem Statorring, Material entfernt, und/oder das Magnetlager, insbesondere wenigstens ein Rotorring und/oder wenigstens ein Statorring mit einem permanentmagnetischen Material, ist zumindest in einem Bereich auf eine Temperatur erwärmt worden, oberhalb der das Material des Magnetlagers seine magnetischen Eigenschaften dauerhaft zumindest teilweise verliert.

Alternativ oder zusätzlich wurden die Form und/oder die materialspezifischen permanentmagnetischen Eigenschaften in einem Bereich des rotorseitigen Teils des Magnetlagers, insbesondere zumindest eines Rotorrings, und/oder in einem Bereich des statorseitigen Teils des Lagers, insbesondere zumindest eines Statorrings, verändert, wobei der Bereich eine zu dem jeweils anderen Teil des Lagers hin weisende Oberfläche bildet. Dadurch kann eine effektive Veränderung des Magnetfelds bzw. der Magnetfeldverteilung zwischen dem rotorseitigen Teil und dem statorseitigen Teil des Magnetlagers erreicht werden, wodurch die Lage der Drehachse derart verstellt werden kann, dass sie sich zumindest annähernd mit der Hauptträgheitsachse in der Ebene des Magnetlagers deckt und/oder dass der Rotor eine verminderte, bevorzugt minimierte, Unwucht aufweist. Außerdem ist der oberflächige Bereich verhältnismäßig einfach zugänglich, um diesen zum Beispiel mittels eines spanabhebenden Verfahrens abzutragen oder mittels Laserstrahlung durch Erwärmen wenigstens teilweise zu entmagnetisieren.

Die Form und/oder die materialspezifischen permanentmagnetischen Eigenschaften sind alternativ oder zusätzlich in einem Bereich des rotorseitigen Teils des Magnetlagers, insbesondere zumindest eines Rotorrings, verändert worden, der eine von dem statorseitigen Teil des Lagers wegweisende Oberfläche bildet. Auf diese Weise kann ebenfalls eine Veränderung des Magnetfelds bzw. der Magnetfeldverteilung zwischen dem rotorseitigen Teil und dem statorseitigen Teil des Magnetlagers erreicht werden, um die Drehachse in gewünschter Weise zu verstellen.

Die Erfindung betrifft außerdem eine Vorrichtung zum Wuchten eines Rotors einer Vakuumpumpe oder einer Rotationseinheit für eine Vakuumpumpe, die dazu eingerichtet und ausgebildet ist, das erfindungsgemäße Verfahren zum Wuchten eines Rotors auszuführen. Dabei kann die erfindungsgemäße Wuchtvorrichtung Mittel zur Durchführung von Schritten des erfindungsgemäßen Verfahrens aufweisen.

Ein nicht beanspruchtes Beispiel betrifft ferner ein Verfahren zum Auswuchten oder Zentrieren eines Rotors eines Elektromotors einer Vakuumpumpe, insbesondere einer Turbomolekularpumpe, wobei der Rotor wenigstens einen Permanentmagneten aufweist und gegenüber einem Stator des Elektromotors drehbar gelagert ist, und wobei die Form und/oder die materialspezifischen Eigenschaften des Permanentmagneten derart verändert werden, dass eine Unwucht und/oder eine Exzentrizität des Rotors verringert, insbesondere minimiert, wird.

Die Verringering bzw. Minimierung der Unwucht und/oder der Exzentrizität des Rotors kann dabei - wie vorstehend mit Bezug auf das Verfahren zum Wuchten eines Rotors einer Vakuumpumpe beschrieben wurde - durch eine mittels einer Veränderung der Form und/oder der materialspezifschen Eigenschaften des Permanentmagnetlagers bewirkten Verstellung der Drehachse des Rotors bewerkstelligt werden.

Vorzugsweise wird eine Unwucht und/oder Exzentrizität des Rotors gemessen. Die Unwucht und/oder Exzentrizität kann verringert bzw. minimiert werden, indem die Drehachse des Rotors verstellt wird, insbesondere in Abhängigkeit von der gemessenen Unwucht und/oder Exzentrizität. Dabei kann die Verstellung der Drehachse, in der entsprechenden Weise wie vorstehend für das Verfahren zum Wuchten eines Rotors einer Vakuumpumpe beschrieben wurde, durch Veränderung der Form und/oder der materialspezifischen Eigenschaften des Permanentmagneten des Rotors des Elektromotors erfolgen.

Vorzugsweise wird die Drehachse des Rotors des Elektromotors wenigstens annähernd in Deckung gebracht mit der Hauptträgheitsachse des Rotors. Es können, insbesondere vor dem Verstellen der Drehachse, die Lage der Drehachse und/oder die Lage der Hauptträgheitsachse ermittelt werden.

Bevorzugt können in Abhängigkeit von einem ursprünglichen Unwucht- oder Exzentrizitätszustand die Form und/oder die materialspezifischen magnetischen Eigenschaften des Permanentmagneten verändert werden, um dadurch das vom Rotor erzeugte Magnetfeld derart zu verändern, dass die Unwucht und/oder die Exzentrizität vermindert bzw. minimiert wird.

Die Form des Permanentmagneten wird vorzugsweise durch Entfernen von Material von dem Permanentmagneten verändert. Dies kann insbesondere mittels eines spanabhebenden Verfahrens durchgeführt werden, welches vorzusgweise aus der Gruppe Schleifen, Bohren, Fräsen und Drehen ausgewählt ist.

Die materialspezifischen magnetischen Eigenschaften des Permanentmagneten können verändert werden, indem der Permanentmagnet zumindest in einem Bereich entmagnetisiert wird. Die Entmagnetisierung kann dabei in der gleichen Weise wie vorstehend mit Bezug auf das Verfahren zum Wuchten eines Rotors einer Vakuumpumpe beschrieben wurde unter Zuhilfenahme eines Lasers erfolgen.

Bevorzugte Ausführungsformen der Erfindung werden nachfolgend beispielhaft anhand der beiliegenden Zeichnungen beschrieben. Es zeigen, jeweils in schematischer Darstellung,
- Fig. 1: eine Vakuumpumpe in perspektivischer Darstellung,
- Fig. 2: einen Axialschnitt der in Fig. 1 gezeigten Vakuumpumpe,
- Fig. 3: eine geschnittene Detailansicht des Magnetlagers der in Fig. 1 und 2 gezeigten Vakuumpumpe,
- Fig. 4: eine axiale Querschnittsansicht der Vakuumpumpe von Fig. 1 zur Erläuterung einer beispielhaften Lage von Wuchtebenen E1, E2 und E3,
- Fig. 5: eine radiale Querschnittsansicht des Rotors und des Stators der Vakuumpumpe von Fig. 1 in der Ebene E3 des Magnetlagers,
- Fig. 6: eine weitere radiale Querschnittsansicht des Rotors und des Stators der Vakuumpumpe von Fig. 1 in der Ebene E3 des Magnetlagers,
- Fig. 7: noch eine weitere axiale Querschnittsansicht des Rotors und des Stators der Vakuumpumpe von Fig. 1 in der Ebene E3 des Magnetlagers,
- Fig. 8: eine weitere axiale Querschnittsansicht der Vakuumpumpe von Fig. 1,
- Fig. 9: noch eine weitere radiale Querschnittsansicht der Vakuumpumpe von Fig. 1, und
- Fig. 10: eine weitere geschnittene Ansicht des Magnetlagers der in Fig. 1 und 2 gezeigten Vakuumpumpe.

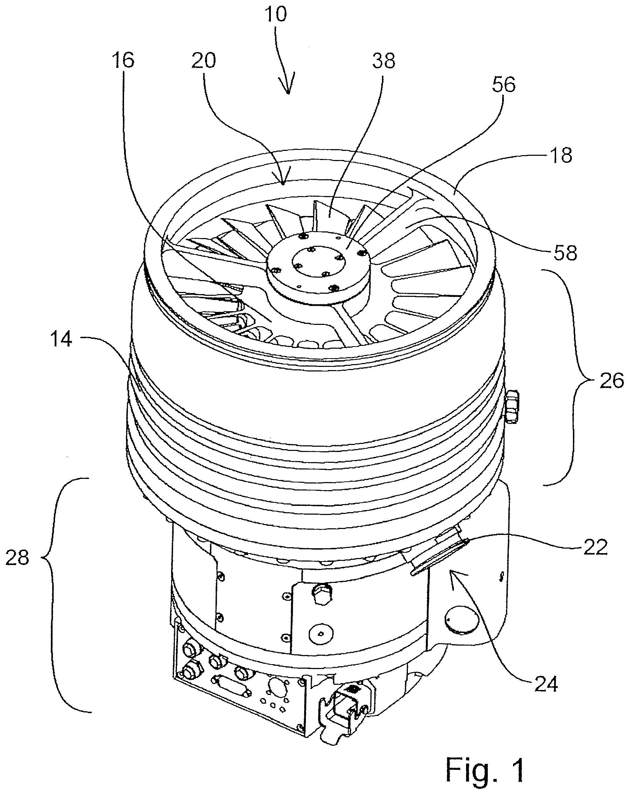

Die als Turbomolekularpumpe ausgebildete Vakuumpumpe 10 der Fig. 1 umfasst einen Stator, welcher einen Teil eines mehrteiligen Pumpengehäuses 14 umfasst, sowie einen Rotor 16, der gegenüber dem Stator drehend antreibbar gelagert ist. Die Vakuumpumpe 10 umfasst an ihrer Hochvakuumseite eine von einem Saugflansch 18 umgebene Ansaugöffnung 20 zur Verbindung mit einem zu evakuierenden Volumen und eine im Bereich der Vorvakuumseite der Vakuumpumpe 10 angeordnete, von einem Vorvakuumflansch 22 umgebene Gasaustrittsöffnung 24 zur Verbindung mit einem Vorvakuum.

Der Stator und der Rotor 16 bilden zusammen eine Rotationseinheit 26 der Vakuumpumpe 10, die mit einem Basisabschnitt bzw. Unterteil 28 der Pumpe 10 lösbar verbunden ist.

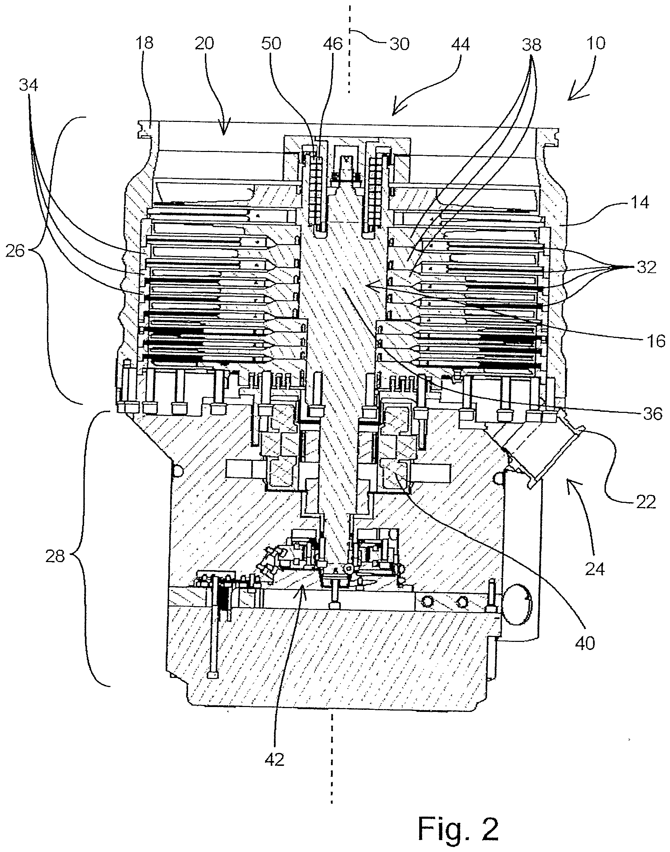

Fig. 2 zeigt die Vakuumpumpe 10 von Fig. 1 in einer entlang ihrer Drehachse 30 teilweise geschnittenen Ansicht. Der Stator umfasst mehrere Statorscheiben 32, die in dem Gehäuse 14 angeordnet und über Distanzelemente 34 in einem definierten Abstand voneinander gehalten sind.

Der Rotor 16 umfasst eine Rotorwelle 36, welche mehrere Rotorscheiben 38 trägt, wobei jeweils eine Rotorscheibe 38 in dem Zwischenraum zwischen zwei Statorscheiben 32 angeordnet ist. Die Statorscheiben 32 und Rotorscheiben 38 weisen jeweils eine mehrere Schaufeln umfassende pumpaktive Struktur auf, so dass eine Statorscheibe 32 jeweils mit der benachbarten Rotorscheibe 38 eine Pumpstufe der Turbomolekularpumpe 10 bildet.

In dem Unterteil 28 ist eine Antriebseinheit 40 angeordnet, die beispielsweise einen Elektromotor umfassen kann und mit der der Rotor 16 zur Bereitstellung der Pumpwirkung drehend antreibbar ist.

Ferner weist die Pumpe 10 ein vorvakuumseitiges Lager 42 auf, welches zur drehbaren Lagerung des Rotors 16 gegenüber dem Unterteil 28 und dem damit verbundenen Stator ausgebildet ist. Das vorvakuumseitige Lager 42 ist dazu eingerichtet, radiale und axiale Lagerkräfte aufzunehmen und ist vorliegend als geschmiertes Wälzlager ausgebildet, das als Kugellager ausgebildet ist.

An ihrer Hochvakuumseite weist die Pumpe 10 ein weiteres, als Permanentmagnetlager ausgebildetes Lager 44 auf, das eine rotorseitige Lagerhälfte und eine statorseitige Lagerhälfte umfasst und das eine drehbare Lagerung des Rotors 16 gegenüber dem Stator bewirkt.

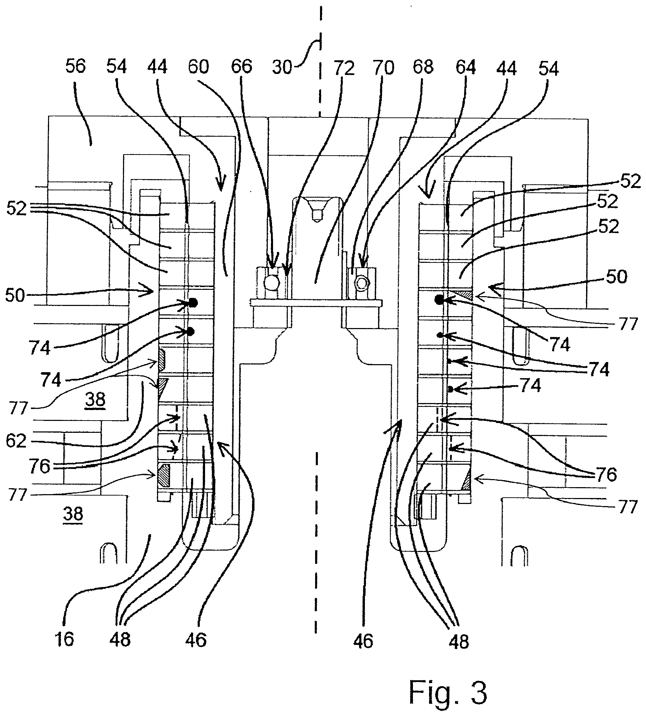

Fig. 3 zeigt den das Permanentmagnetlager 44 umfassenden Ausschnitt der in Fig. 2 gezeigten Pumpe 10 in einer teilweise geschnittenen Detailansicht. Das Lager 44 umfasst einen statorseitigen Magnetringstapel 46 aus mehreren Statormagnetringen 48 und einen rotorseitigen Magnetringstapel 50 aus mehreren Rotormagnetringen 52. Die Magnetringe 48, 52 eines Stapels 46, 50 sind dabei in axialer Richtung aufeinander gestapelt und bilden eine zumindest näherungsweise zylindermantelförmige Grundform des jeweiligen Stapels 46, 50.

Der statorseitige Magnetringstapel 46 und der rotorseitige Magnetringstapel 50 sind dabei jeweils im Wesentlichen koaxial zu der Drehachse 30 der Pumpe 10 angeordnet, wobei der statorseitige Stapel 46 so innerhalb des rotorseitigen Stapels 50 angeordnet ist, dass die radialen Außenseiten der Rotorringe 48 den radialen Innenseiten der Statorringe 52 gegenüberliegen und zwischen diesen ein zumindest näherungsweise zylindermantelförmiger Spalt 54 mit einer geringen, durch die radiale Erstreckung des Spalts 44 gebildeten Spaltweite ausgebildet ist.

Der Stator weist einen Trägerabschnitt 56 auf, der in der Mitte der Ansaugöffnung 20 angeordnet ist und im vorliegenden Ausführungsbeispiel, wie in Fig. 1 gezeigt, über mehrere in der Ansaugöffnung 20 angeordnete radiale Streben 58 mit dem Gehäuse 14 verbunden ist. Der Trägerabschnitt 56 umfasst einen sich in axialer Richtung erstreckenden, im Wesentlichen zylindermantelförmigen Halteabschnitt 60, der sich in das Innere des statorseitigen Stapels 46 hinein erstreckt, wobei die Statorringe 46 mit ihren radialen Innenseiten jeweils an der radialen Außenseite des Halteabschnitts 60 anliegen und von diesem gehalten werden.

Der Rotor 16 weist ebenfalls einen im Wesentlichen zylindermantelförmigen Halteabschnitt 62 auf, wobei die Rotorringe 52 mit ihren radialen Außenseiten an der radialen Innenseite des Halteabschnitts 62 anliegen und von diesem gehalten werden.

Die Pumpe 10 weist ferner ein Fanglager 64 auf, welches einen drehbaren Anschlag für den Rotor 16 bildet und eine radiale Bewegung des Stators und des Rotors 16 relativ zueinander begrenzt, die z.B. durch von auf die Pumpe 10 einwirkenden Stößen oder während des Betriebs der Pumpe 10 auftretenden Vibrationen hervorgerufen wird. Dadurch wird verhindert, dass die Ringe 48, 52 der beiden Stapel 46, 50 infolge einer solchen radialen Relativbewegung mechanisch miteinander in Kontakt geraten und das Permanentmagnetlager 44 beschädigt wird.

Das Fanglager 64 umfasst ein im Inneren des Permanentmagnetlagers 44 angeordnetes, als Kugellager ausgebildetes Wälzlager 66, welches den Trägerabschnitt 56 drehbar mit einer als Anschlag dienenden Fanghülse 68 verbindet. Der Rotor 16 weist einen Zapfenabschnitt 70 auf, der sich in die Fanghülse 68 hinein erstreckt. Zwischen der Fanghülse 68 und dem Zapfenabschnitt 70 ist im Ruhezustand bzw. bei gleichlaufendem Betrieb der Pumpe 10 ein den gesamten Drehwinkel abdeckender Spalt 72 ausgebildet, so dass die Fanghülse 68 und der Zapfenabschnitt 70 sich in diesem Zustand nicht berühren und der Rotor 16 außer Eingriff mit dem Kugellager 66 steht. Erst bei einer radialen Auslenkung des Rotors 16 berühren sich Fanghülse 68 und Zapfenabschnitt 70, so dass der Rotor 16 mit dem Kugellager 66 in Eingriff gelangt und das Kugellager 66 mit der Fanghülse 68 einen Anschlag für den Rotor 16 bildet, der eine Kollision der Magnetringstapel 46, 50 verhindert. Der Spalt 72 kann dazu eine geringere radiale Spaltweite aufweisen als der Spalt 54. Da der durch das Kugellager 66 gebildete Anschlag eine drehende Relativbewegung des Rotors 16 zulässt, wird eine abrupte Abbremsung des Rotors 16 bei dem Eingreifen des Fanlagers 64 vermieden. Das Kugellager 66 ist als nicht geschmiertes Kugellager 66 ausgebildet, so dass eine Verschmutzung des durch die Pumpe 10 erzeugten Vakuums durch das Kugellager 66 ausgeschlossen ist.

Wie die Fig. 2 und 3 zeigen, verläuft die Drehachse 30 im Idealfall genau in axialer Richtung der Pumpe 10. Somit fällt die Drehachse 30 im Idealfall gewissermaßen mit der in axialer Richtung verlaufenden Figurenachse der Vakuumpumpe 10 zusammen. Die Funktion des Permanentmagnetlagers 44 beruht auf den von den Statorringen 48 und Rotorringen 52 erzeugten, einander entgegengesetzten magnetischen Feldern und den dadurch erzeugten, in radialer Richtung orientierten magnetischen Abstoßungskräften zwischen den Statorringen 48 und den Rotorringen 52. Die Lagerkräfte in Form dieser radialen magnetischen Abstoßungskräfte bewirken die drehbare radiale Lagerung des Rotors 16 gegenüber dem Stator. Allerdings sind diese Kräfte im Normalfall nicht exakt rotationssymmetrisch, so dass die Drehachse 30 im Normalfall nicht genau in axialer Richtung verläuft, sondern dazu wenigstens geringfügig geneigt ist.

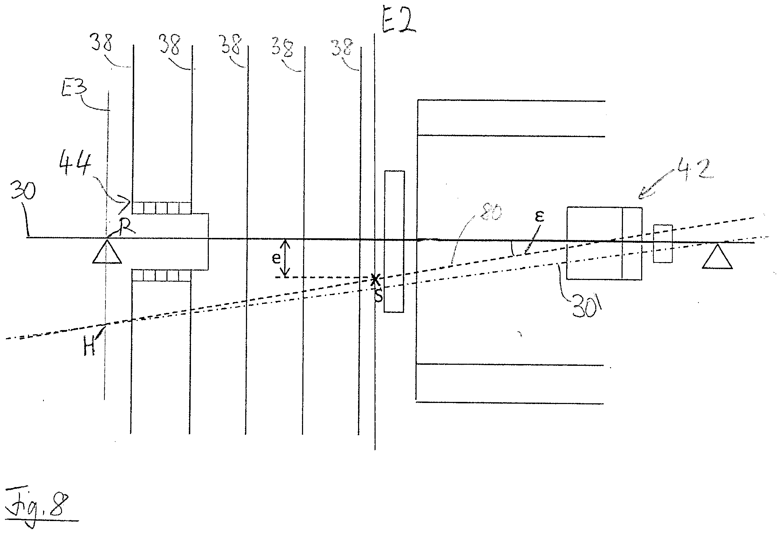

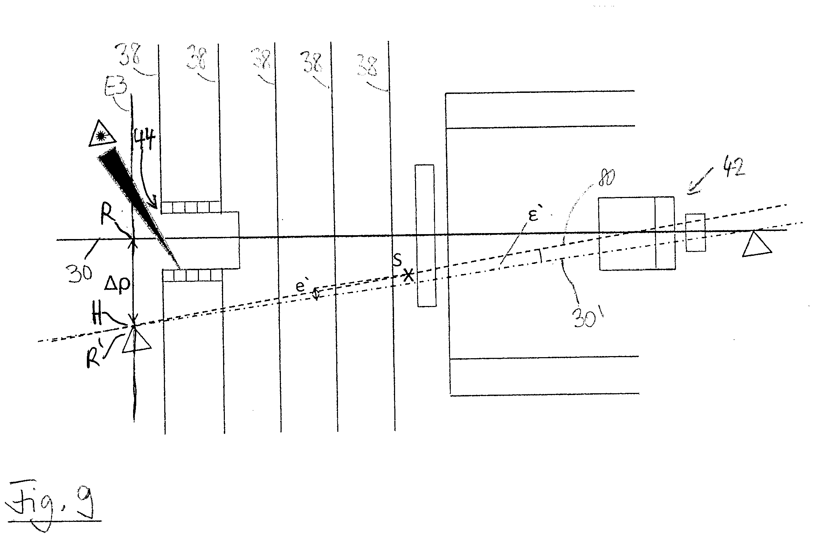

Ferner führt eine bezogen auf die Drehachse 30 nicht perfekt rotationssymmetrische Massenverteilung des Rotors 16 zu einer Unwucht, die bei rotierendem Rotor 16 beispielsweise Vibrationen erzeugen, den Rotor 16 beschädigen, den Verschleiß der Pumpe 10 erhöhen, deren Betriebssicherheit beeinträchtigen und/oder die maximale zulässige Drehzahl der Pumpe 10 herabsetzen kann. Mit der Unwucht hängt eine Hauptträgheitsachse zusammen (vgl. die Hauptträgheitsachse 80 in den Fig. 8 und 9), die bei nicht gewuchtetem Rotor 16 von der Drehachse 30 abweicht.

Gemäß einer bevorzugten Ausführungsform des erfindungsgemäßen Verfahrens wird die Unwucht des Rotors 16, insbesondere in einer Ebene E3 des Magnetlagers 44, gemessen. Anschließend wird die Lage der Drehachse 30 in Abhängigkeit von der gemessenen Unwucht verstellt, um die Unwucht zu vermindern oder bevorzugt wenigstens weitgehend zu beseitigen. Dazu wird die Drehachse 30 in eine optimale Lage gebracht, in der die verbleibende Unwucht des Rotors 16 minimal ist. Somit wird die Unwucht des Rotors durch Verstellen der Lage der Drehachse bzw. durch Bringen der Drehachse in die optimale Lage minimiert. In der optimalen Lage kann außerdem die Drehachse 30 in der Magnetlagerebene E3 wenigstens weitgehend in Deckung sein mit der Hauptträgheitsachse 80 des Rotors 16.

Die Verstellung der Lage der Drehachse 30 kann dabei folgendermaßen erfolgen. In Fig. 3 sind mehrere Bereiche 74 der Statormagnetringe 48 und Rotormagnetringe 52 gezeigt, die durch eine Bestrahlung mit einem Laser auf eine Temperatur erwärmt wurden, bei der eine Entmagnetisierung des Materials der Magnetringe 48, 52 auftritt, so dass die von diesen Bereichen 74 erzeugte permanente magnetische Flussdichte bzw. Remanenz verringert und die durch das Magnetfeld erzeugten Lagerkräfte des Permanentmagnetlagers 44 in den entsprechenden örtlichen Bereichen geschwächt wurde. Die Bereiche 74 weisen eine Struktur auf, anhand der sich die durchgeführte Erwärmung ab einem bestimmten Veränderungsgrad visuell von außen auf den Magnetringen 48, 52 erkennen lässt. Des Weiteren kann eine nachträgliche Magnetisierungsveränderung an den Magneten auch durch eine Magnetfeldvermessung im Nahfeld nachgewiesen werden.

Ferner sind in Fig. 3 durch gestrichelte Linien Bereiche 76 der Magnetringe 48, 52 angedeutet, die durch mechanische Bearbeitung wie z.B. ein spanabhebendes Materialentfernungsverfahren von den Magnetringen 48, 52 entfernt werden können, um auf diese Weise die von dem Magnetlager 44 erzeugten Lagerkräfte in den entsprechenden Bereichen zu schwächen. Die Entfernung des Materials kann dabei z.B. nur über einen Teilwinkelbereich des jeweiligen Rings 48, 52, beispielsweise über einen Winkelbereich zwischen 45° und 90°, erfolgen. Ein entfernter Bereich kann in axialer Richtung betrachtet beispielsweise eine Sichelform aufweisen. Eine solche mechanische Bearbeitung und Materialentfernung wird an den Magnetringen 48, 52 eindeutig in Form von entsprechenden Bearbeitungsspuren, beispielsweise entsprechenden Schleif-, Bohr-, Fräs- oder Drehspuren an der Oberfläche der resultierenden Magnetringe 48, 52 sichtbar. Die Bereiche 76 sind in Fig. 3 der Anschaulichkeit halber übertrieben groß dargestellt.

Die Bereiche 74 und 76 sind jeweils an den den Spalt 54 begrenzenden und einander gegenüberliegenden Oberflächen des rotorseitigen Lagerteils 50 und des statorseitigen Lagerteils 46 angeordnet, d.h. an der radialen Innenfläche des rotorseitigen Lagerteils 50 bzw. der Rotorringe 52 und an der radialen Außenfläche des statorseitigen Lagerteils 46 bzw. der Statorringe 48.

Der rotorseitige Lagerteil 50 weist außerdem in Fig. 3 schraffiert dargestellte Bereiche 77 auf, in denen die permanentmagnetischen Eigenschaften des rotorseitigen Lagerteils 50 in der vorstehend in Bezug auf die Bereiche 74, 76 beschriebenen Weise durch Materialentfernung oder Entmagnetisierung verändert werden können. Die Bereiche 77 sind an der radialen Außenfläche und somit an der von dem statorseitigen Lagerteil 46 abgewandten Oberfläche des rotorseitigen Lagerteils 50 angeordnet und die Veränderung in den Bereichen 77 verändert das Streufeld des Magnetlagers 44 und vermeidet insbesondere ein störendes Wechselfeld bei dem Betrieb der Vakuumpumpe 10 oder reduziert dieses. Die Veränderung in den Bereichen 77 kann auch in entsprechender Ausprägung den Drehpunkt der Drehachse 30 in der Ebene E3 analog zu den Bereichen 74, 76 beeinflussen.

Durch die vorstehend beschriebene Wärmebehandlung und/oder durch die mechanische Bearbeitung in den Bereichen 74, 76, 77 können die von dem Magnetlager 44 erzeugten Lagerkräfte und/oder das erzeugte Streufeld örtlich gezielt und flexibel so angepasst werden, dass die Drehachse 30 vor allem in der Ebene E3 des Magnetlagers 44 aus ihrer ursprünglichen Lage bewegt und dabei im Bereich der Ebene E3 weitgehend in Deckung gebracht werden kann mit der Hauptträgheitsachse (vgl. die Lage der verstellten Drehachse 30' in den Fig. 8 und 9) oder sich der Hauptträgheitsachse soweit nähert, bis ein Minimum der Restunwucht des gesamten Rotors erzielt wird.

Da nach dem Verstellen die verbleibende Unwucht minimiert ist, kann der Rotor 16 wenigstens in der Ebene E3 im Wesentlichen frei von einer Unwucht rotieren. Der Rotor 16 konnte somit in der Ebene E3 praktisch ausgewuchtet werden.

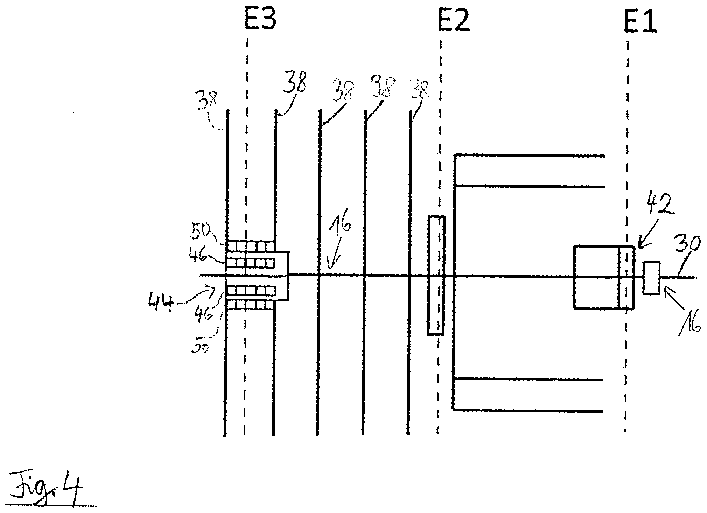

Die axiale Querschnittsansicht der Fig. 4 dient zur Illustration der Lagen der Wuchtebenen E1, E2 und E3, in denen ein beispielhafter Rotor 16 gewuchtet wird. Je nach Ausprägung ist das Verfahren auch für eine Wuchtebenenanzahl größer als zwei Wuchtebenen nutzbar. Die Wuchtebene E3 liegt im Bereich des Magnetringstapels 46, 50 und senkrecht zur Figurenachse der Pumpe 10, die sich in Fig. 4 mit der Drehachse 30 deckt.

Die Wuchtebene E2 verläuft parallel zur Wuchtebene E3 und liegt ungefähr in der Mitte zwischen dem Permanentmagnetlager 44 und dem Kugellager 42. Die Wuchtebene E2 wird normalerweise so gewählt, dass der Schwerpunkt S (vgl. Fig. 8) des Rotors 18 in der Wuchtebene E2 oder zumindest in der Nähe der Wuchtebene E2 liegt. Die Wuchtebene E1 verläuft parallel zu den Wuchtebenen E2 und E3 liegt im Bereich des Kugellagers 42 oder der Antriebseinheit 40.

Wie vorstehend bereits erwähnt wurde, wird der Rotor 16 in der Magnetlagerebene E3 gewuchtet, indem die Lage der Drehachse 30 in Abhängigkeit von einer gemessenen Unwucht verstellt wird. Dabei wird die Unwucht verringert und bevorzugt dadurch minimiert, dass die Drehachse in eine optimale Lage gebracht wird, in der die verbleibende Unwucht des Rotors minimiert ist.

Vor dem Verstellen der Unwucht wird dabei die optimale Lage der Drehachse anhand eines Wuchtalgorithmus und vorzugsweise in Abhängigkeit von der gemessenen Unwucht berechnet.

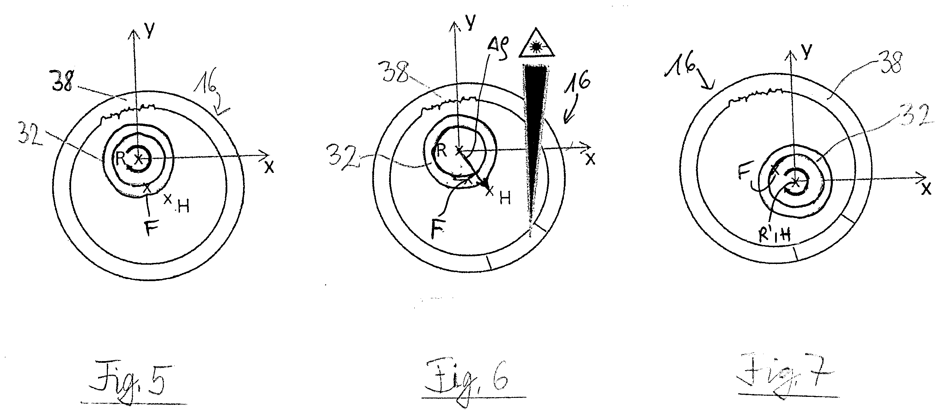

In ihrer optimalen Lage kann die Drehachse 30 zumindest in der Ebene E3 wenigstens näherungsweise in Deckung sein mit der Hauptträgheitsachse 80. Die radialen Querschnittsansichten der Fig. 5 bis 7 sowie die axialen Querschnittsansichten der Fig. 8 und 9 dienen zur näheren Erläuterung. Die Fig. 5 bis 7 zeigen dabei in der Ebene E3 jeweils einen radialen Querschnitt durch das Permanentmagnetlager 44, wobei die dazugehörigen Stator- und Rotorringe 32, 38 gezeigt sind.

Die Fig. 8 und 9 zeigen dagegen einen axialen Querschnitt, wobei die Drehachse vor dem Wuchten mit dem Bezugszeichen 30 und nach deren Verstellung, also nach dem Wuchten, mit dem Bezugszeichen 30' bezeichnet ist. Die Hauptträgheitsachse 80 ist ebenfalls in den Fig. 8 und 9 gezeigt. Der Einfachheit halber verläuft in den Fig. 8 und 9 die Drehachse 30 vor dem Wuchten in axialer Richtung, d.h. sie fällt in den Fig. 8 und 9 aus Gründen der einfacheren Darstellung mit der Figurenachse der Pumpe 10 zusammen, wenngleich sie, wie vorstehend ausgeführt wurde, aufgrund der normalerweise geringfügig asymmetrischen Verteilung der Magnetlagerkräfte leicht geneigt dazu verläuft.

Das in den Fig. 5 bis 7 gezeigte Koordinatensystem ist das Laborsystem der Pumpe 10 und mit dem Statorring 32 fixiert. Der Schnittpunkt der Drehachse 30 des Rotors 16 mit der Ebene E3 wird nachfolgend als Drehpunkt R bezeichnet. Der Schnittpunkt der verstellten Drehachse 30' wird dagegen als Drehpunkt R' bezeichnet. Der Schnittpunkt der Ebene E3 mit der Figurenachse, die der geometrischen Mittelachse der Pumpe 10 entspricht, wird mit Figurenachsenpunkt F bezeichnet und der Schnittpunkt der Hauptträgheitsachse 80 mit der Ebene E3 wird als Hauptträgheitsachsenpunkt H bezeichnet.

Wie die Fig. 5, 8 und 9 zeigen, weicht bei nicht gewuchtetem Rotor 16 die Hauptträgheitsachse 80 von der Drehachse 30 des Rotors ab, so dass der Drehpunkt R und der Hauptträgheitsachsenpunkt H nicht deckungsgleich sind. Außerdem weicht - hauptsächlich aufgrund der normalerweise nicht perfekt symmetrischen Magnetfeldverteilung im Permanentmagnetlager 44 - die Drehachse 30 von der Figurenachse ab, so dass der Figurenachsenpunkt F und der Drehpunkt R voneinander beabstandet sind, wie Fig. 5 zeigt.

Zum Wuchten des Rotors 16 werden dessen Unwucht in der Magnetlagerebene E3 gemessen und die Lage der Hauptträgheitsachse 80 oder zumindest die Lage des Hauptträgheitsachsenpunkts H bestimmt, insbesondere anhand der gemessenen Unwucht. Die Lage des Hauptträgheitsachsenpunkts H in der Ebene E3 ist somit bekannt. Außerdem wird die Lage der Drehachse 30 oder zumindest die Lage des Drehpunkts R vor dem Wuchten bestimmt. Die Lage des Drehpunkts R ist somit ebenfalls bekannt (vgl. Fig. 5).

Sodann wird nach einer Variante des erfindungsgemäßen Verfahrens nach Betrag und Richtung eine Abweichung Δρ der Lage des Drehpunkts R von der Lage des Hauptträgheitsachsenpunkts H bestimmt, wie in Fig. 6 in Form des von R nach H gerichteten Pfeils gezeigt ist.

Die Abweichung Δρ kann betrachtet werden als ein Maß für eine erforderliche Verschiebung des Drehpunkts R, um diesen mit dem Hauptträgheitsachsenpunkt H in Deckung zu bringen (vgl. Fig. 6 und 7). Dadurch gelangt die Drehachse 30' in Deckung mit der Hauptträgheitsachse 80 wenigstens im Bereich der Magnetlagerebene E3 und eine vorhandene Unwucht wird dadurch wenigstens näherungsweise minimiert. In der Praxis hat sich gezeigt, dass die Abweichung Δρ normalerweise einige Mikrometer beträgt, d.h. die Abweichungen der Achsen 30', 80 von der ursprünglichen Drehachse sind zur Illustration übertrieben groß gezeichnet.

Die Verstellung des Drehpunkts R bzw. der Drehachse 30 zur Kompensation der Abweichung Δρ kann dabei, wie vorstehend mit Bezug auf die Fig. 3 beschrieben wurde, insbesondere dadurch erfolgen, dass gezielt Bereiche 74 der Statormagnetringe 48 und Rotormagnetringe 52 mit einem Laser auf eine Temperatur erwärmt werden, bei der eine Entmagnetisierung des Materials auftritt, so dass die von diesen Bereichen 74 erzeugte permanentmagnetische Flussdichte bzw. Remanenz verringert und die durch das Magnetfeld erzeugten Lagerkräfte des Permanentmagnetlagers 44 in den entsprechenden örtlichen Bereichen geschwächt wird. Der Rotor 16 kann somit zumindest in der Wuchtebene E3 durch Verändern der Lage der Drehachse 30, 30' (vgl. den Drehachsenpunkt R in den Fig. 5 bis 7) gewuchtet werden, indem der Drehpunkt R in Deckung gebracht wird mit dem Hauptträgheitsachsenpunkt H (vgl. Fig. 7).

Entsprechend kann, wie vorstehend ebenfalls mit Bezug auf die Fig. 3 beschrieben wurde, der Drehpunkt R mittels mechanischer Bearbeitung von gezielt gewählten Bereichen des Magnetlagers 44 verstellt und mit dem Hauptträgheitsachsenpunkt H in Deckung gebracht werden. Im Ergebnis liegen somit die Punkte R' und H übereinander, wie Fig. 7 zeigt. Die Hauptträgheitsachse 80 deckt sich daher wenigstens im Bereich der Ebene E3 mit der Drehachse 30'. Der Rotor 16 läuft somit wenigstens in der Ebene E3 im Wesentlichen ohne Unwucht.

Durch das vorstehend beschriebene Verfahren zum Wuchten des Rotors 16 in der Ebene E3 durch in Deckung bringen der Drehachse 30, 30' mit der Hauptträgheitsachse 80 kann der Rotor 16 allerdings nicht längs seiner ganzen axialen Länge gewuchtet werden. Vielmehr ist wenigstens noch ein Wuchten in der Ebene E2 nötig, die durch den auf der Hauptträgheitsachse 80 liegenden Schwerpunkt S oder zumindest in der Nähe des Schwerpunkts S verläuft. Dabei wird die Unwucht des Rotors 16 in der Ebene E2 gemessen und durch Abtragen von Material von dem Rotor 16 in der Ebene E2 oder zumindest in der Nähe der Ebene E2 gewuchtet. Dabei wird das Material mittels einer bevorzugt stark fokussierten und hochintensiven Laserstrahlung abgetragen, und zwar bevorzugt während sich der Rotor 16 dreht.

Dies kann insbesondere durch ein nicht gezeigtes Lasersystem bewerkstelligt werden, das wenigstens einen Laser zur Emission der Laserstrahlung und eine Steuerung für den Laser aufweist. Die Steuerung kann dabei derart ausgebildet sein, dass sie eine Winkelstellung des sich drehenden Rotors 16 erfassen und den Laser derart ansteuern kann, dass dieser die Laserstrahlung in Abhängigkeit von der Winkelstellung emittiert. Dadurch kann gewissermaßen punktuell bei einer gewünschten Winkelstellung des Rotors 16 Material vom Rotor 16 abgetragen werden, während sich der Rotor 16 dreht. Der Rotor 16 kann somit durch Materialabtragung ausgewuchtet werden.

Der in Fig. 8 eingezeichnete Abstand e zwischen der sich mit der Drehachse 30 deckenden Figurenachse und dem Schwerpunkt S ist ein Maß für eine sogenannte statische Unwucht des Rotors während der Winkel ε proportional zu einer sogenannten dynamischen Unwucht ist. Durch Verstellen der Drehachse 30 derart, dass sie die Lage der Drehachse 30' einnimmt, werden der verstellte Abstand e' und der verstellte Winkel ε' kleiner, wie Fig. 9 zeigt. In Kombination mit dem Wuchten des Rotors in der Ebene E2 durch Materialabtragung kann der Rotor 16 daher mit hoher Präzision in den Ebenen E3 und E2 ausgewuchtet werden.

Nach einer anderen Variante des Verfahrens können anhand einer gemessenen Unwucht die Lage der Drehachse 30 und/oder die Lage des Drehpunkts R und/oder die Lage der Hauptträgheitsachse 80 und/oder die Lage des Hauptträgheitsachsenpunkts H bestimmt werden. Darauf basierend kann mittels eines Wuchtalgorithmus die erforderliche Lasereinstrahlung bestimmt werden, insbesondere die Anzahl an Strahlungseinheiten, die Lasereinstrahldosis und/oder die Positionen der zu erwärmenden Bereiche des Magnetlagers.

Dies kann in ähnlicher Weise empirisch erfolgen wie bei aus dem Stand der Technik bekannten Wuchtverfahren, bei denen durch sog. Einflusszahlen die Reaktion des Rotors auf ein eingeschraubtes Probegewicht ermittelt und als Referenz für einen Wuchtprozess herangezogen wird. Die Einflusszahlen beschreiben dabei das Verhalten des Rotors auf ein Wuchtgewicht. Ein entsprechendes Vorgehen wird für die Bestimmung der Lasereinstrahlung verwendet, wobei Lasereinflusszahlen durch Einstrahlung von Test-Laserdosen in das Magnetlager ermittelt werden. Die auf diese Weise ermittelten Einflusszahlen werden herangezogen, um einen gewissen Unwuchtzustand zu verringern bzw. zu kompensieren. Je größer die gesammelte Datenmenge der durch die Lasereinstrahlung erzeugten Unwuchtveränderungen ist, desto genauer können die Lasereinflusszahlen für einen jeweiligen Rotortyp ermittelt werden.

Der Wuchtalgorithmus kann somit die empirsch gewonnenen Lasereinflusszahlen verwenden, um die erforderliche Lasereinstrahlung, also insbesondere die Anzahl an Strahlungseinheiten, die Lasereinstrahldosis und/oder die Positionen der zu bestrahlenden Bereiche der Permanentmagnete am Rotor bzw. am Stator, zu berechnen. Über eine Lasersteuerung kann dann ein Laser anhand der errechneten Lasereinstrahlung so gesteuert werden, dass die jeweils zu bestrahlenden Bereiche in der errechneten Art und Weise mit Laserstrahlung beaufschlagt werden, um die Drehachse in die errechnete optimale Lage zu verstellen und dadurch eine Unwucht des Rotors zu minimieren oder eventuell sogar zu beseitigen.

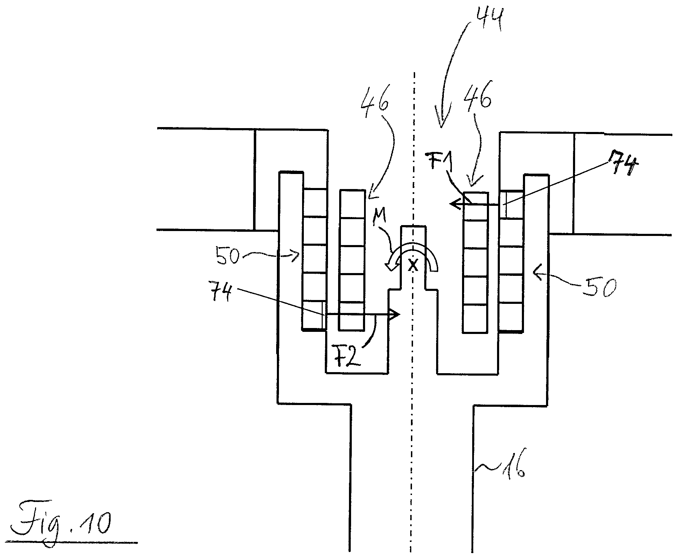

Fig. 10 dient zur Illustration, dass mittels der Lasereinstrahlung auch magnetische Momente erzeugt werden können. Bei dem gezeigten Magnetlager 44 ist im obersten Ring des rotorseitigen Magnetringstapels 50 ein Bereich 74 mittels Lasereinstrahlung entmagnetisiert worden. Durch die dadurch verursachte Schwächung ergibt sich eine nach links gerichtete Kraft F1. In entsprechender Weise wurde der Bereich 74 im untersten Ring des statorseitigen Magnetringstapels 46 durch Entmagnetisierung mittels Laserstrahlung geschwächt, woraus eine nach rechts gerichtete Kraft F2 bewirkt wird. Beide Kräfte F1 und F2 bewirken ein resultierendes Drehmoment M im Magnetlager 44, welches zum Beispiel zur Kompensation von im Magnetlager bereits vorhandener magnetischer Momente und/oder zur Reduzierung einer dynamischen Unwucht herangezogen werden kann.

### Bezugszeichenliste

- 10: Vakuumpumpe
- 14: Gehäuse
- 16: Rotor
- 18: Saugflansch
- 20: Ansaugöffnung
- 22: Vorvakuumflansch
- 24: Gasaustrittsöffnung
- 26: Rotationseinheit
- 28: Unterteil
- 30, 30': Drehachse
- 32: Statorscheibe
- 34: Distanzelement
- 36: Rotorwelle
- 38: Rotorscheibe
- 40: Antriebseinheit
- 42: Kugellager
- 44: Permanentmagnetlager
- 46: statorseitiger Magnetringstapel
- 48: statorseitiger Magnetring
- 50: rotorseitiger Magnetringstapel
- 52: rotorseitiger Magnetring
- 54: Spalt
- 56: Trägerabschnitt
- 58: Strebe
- 60, 62: Halteabschnitt
- 64: Fanglager
- 66: Kugellager
- 68: Fanghülse
- 70: Zapfenabschnitt
- 72: Spalt
- 74, 76, 77: Bereich
- 80: Hauptträgheitsachse
- 82: Figurenachse

- R, R': Drehpunkt
- F: Figurenachsenpunkt
- H: Hauptträgheitsachsenpunkt
- e, e': Abstand
- ε, ε': Winkel
- S: Schwerpunkt
- E1, E2, E3: Wuchtebene
- Δρ: Abweichung
- M: Drehmoment
- F1, F2: Kraft

## Patentansprüche

1. Verfahren zum Wuchten eines Rotors (16) einer Vakuumpumpe (10), insbesondere Turbomolekularpumpe, oder eines Rotors (16) einer Rotationseinheit (26) für eine Vakuumpumpe (10), insbesondere Turbomolekularpumpe,
wobei der Rotor (16) mittels wenigstens eines Magnetlagers (44), insbesondere eines Permanentmagnetlagers, gegenüber einem Stator der Vakuumpumpe (10) oder der Rotationseinheit (26) um eine Drehachse (30, 30') drehbar gelagert ist,
**dadurch gekennzeichnet, dass**
bei dem Verfahren eine Unwucht des Rotors (16) in wenigstens einer Ebene (E2) außerhalb der Ebene (E3) des Magnetlagers (44) gemessen und die Unwucht durch Abtragen von Material von dem Rotor (16) mittels Laserstrahlung in der Ebene (E2) außerhalb der Magnetlagerebene (E3) zumindest annähernd beseitigt wird.

2. Verfahren nach Anspruch 1,
**dadurch gekennzeichnet, dass**
das Material abgetragen wird, während sich der Rotor (16), vorzugsweise während oder im Nachgang der Unwuchtmessung, dreht.

3. Verfahren nach Anspruch 1 oder 2,
**dadurch gekennzeichnet, dass**
das Verfahren ferner die Schritte umfasst:
Messen einer Unwucht des Rotors (16) in der Ebene (E3) des Magnetlagers (44), und
Verstellen der Lage der Drehachse (30, 30') in Abhängigkeit von der in der Ebene (E3) des Magnetlagers (44) gemessenen Unwucht.

4. Verfahren nach Anspruch 3,
**dadurch gekennzeichnet, dass**
das Magnetlager (44) in Abhängigkeit von einer Abweichung (Δρ) der Lage der Drehachse (30, 30') von der Lage der Hauptträgheitsachse (80) verändert wird, insbesondere hinsichtlich seiner Form und/oder seiner materialspezifischen magnetischen Eigenschaften,
wobei, bevorzugt, die Abweichung (Δρ) nach Betrag und Richtung bestimmt wird.

5. Verfahren nach Anspruch 3 oder 4,
**dadurch gekennzeichnet, dass**
zum Verstellen der Lage der Drehachse (30, 30') von wenigstens einem Permanentmagneten (48, 52) des Magnetlagers (44) Material entfernt wird, insbesondere durch ein spanabhebendes Verfahren, welches vorzugsweise aus der Gruppe Schleifen, Bohren, Fräsen und Drehen ausgewählt ist.

6. Verfahren nach einem der Ansprüche 3 bis 5,
**dadurch gekennzeichnet, dass**
zum Verstellen der Lage der Drehachse (30, 30') wenigstens ein Permanentmagnet (48, 52) des Magnetlagers (44) zumindest in einem Bereich (74) wenigstens teilweise entmagnetisiert wird.

7. Verfahren nach Anspruch 6,
**dadurch gekennzeichnet, dass**
der Bereich (74) durch Erwärmen auf eine Temperatur, oberhalb der der Permanentmagnet (48, 52) zumindest teilweise seine magnetischen Eigenschaften dauerhaft verliert, entmagnetisiert wird, und/oder der Bereich (74) durch Bestrahlen mit Laserstrahlung erwärmt wird.

8. Verfahren nach einem der Ansprüche 3 bis 7,
**dadurch gekennzeichnet, dass**
die Lage der Drehachse (30, 30') und/oder die Lage der Hauptträgheitsachse (80), insbesondere in der Magnetlagerebene (E3), vor dem Verstellen bestimmt werden, wobei, bevorzugt, die Lage der Hauptträgheitsachse (80) in Abhängigkeit von der gemessenen Unwucht bestimmt wird.

9. Vakuumpumpe (10), insbesondere Turbomolekularpumpe, oder Rotationseinheit (26) für eine Vakuumpumpe (10), insbesondere für eine Turbomolekularpumpe, mit einem Rotor (16), der mittels wenigstens eines Magnetlagers (44), insbesondere eines Permanentmagnetlagers, gegenüber einem Stator der Vakuumpumpe (10) oder der Rotationseinheit (26) um eine Drehachse (30, 30') drehbar gelagert ist,
wobei die Lage der Drehachse (30, 30') derart verstellt wurde, dass die Drehachse (30, 30') wenigstens in der Ebene (E3) des Magnetlagers (44) zumindest annähernd in Deckung gebracht ist mit der Hauptträgheitsachse (80) des Rotors (16),
**dadurch gekennzeichnet,**
**dass** eine Unwucht des Rotors (16) in wenigstens einer Ebene (E2) außerhalb der Ebene (E3) des Magnetlagers (44) durch Abtragung von Material von dem Rotor (16) mittels Laserstrahlung zumindest annähernd beseitigt ist, und
von dem Magnetlager (44), insbesondere von wenigstens einem Rotorring (52) und/oder wenigstens einem Statorring (48), Material entfernt ist
**und/oder dass**
eine Unwucht des Rotors (16) in wenigstens einer Ebene (E2) außerhalb der Ebene (E3) des Magnetlagers (44) durch Abtragung von Material von dem Rotor (16) mittels Laserstrahlung zumindest annähernd beseitigt ist, wobei das Magnetlager (44), insbesondere wenigstens ein Rotorring (52) und/oder wenigstens ein Statorring (48) mit einem permanentmagnetischen Material, zumindest in einem Bereich (74) auf eine Temperatur erwärmt worden ist, oberhalb der das Material des Magnetlagers (44) seine permanentmagnetischen Eigenschaften dauerhaft zumindest teilweise verliert,
**und/oder dass**
eine Unwucht des Rotors (16) in wenigstens einer Ebene (E2) außerhalb der Ebene (E3) des Magnetlagers (44) durch Abtragung von Material von dem Rotor (16) mittels Laserstrahlung zumindest annähernd beseitigt ist, wobei
die Form und/oder die materialspezifischen magnetischen Eigenschaften in einem Bereich des rotorseitigen Teils (50) des Lagers (44), insbesondere zumindest eines Rotorrings (52), und/oder zumindest eines statorseitigen Teils (46) des Lagers (44), insbesondere zumindest eines Statorrings (48), verändert wurden, der eine zu dem jeweils anderen Teil (46, 50) des Lagers (44) hin weisende Oberfläche bildet,
**und/oder dass**
eine Unwucht des Rotors (16) in wenigstens einer Ebene (E2) außerhalb der Ebene (E3) des Magnetlagers (44) durch Abtragung von Material von dem Rotor (16) mittels Laserstrahlung zumindest annähernd beseitigt ist, wobei
die Form und/oder die materialspezifischen magnetischen Eigenschaften in einem Bereich des rotorseitigen Teils (50) des Lagers (44), insbesondere zumindest eines Rotorrings, verändert worden sind, der eine von dem statorseitigen Teil (46) des Lagers (44) wegweisende Oberfläche bildet.

10. Vorrichtung zum Wuchten eines Rotors (16) einer Vakuumpumpe (10) oder einer Rotationseinheit (26) für eine Vakuumpumpe (10), die dazu eingerichtet und ausgebildet ist, ein Verfahren gemäß einem der Ansprüche 1 bis 8 auszuführen.

## Claims

1. A method of balancing a rotor (16) of a vacuum pump (10), in particular of a turbomolecular pump, or a rotor (16) of a rotation unit (26) for a vacuum pump (10), in particular for a turbomolecular pump,
wherein the rotor (16) is rotatably supported about an axis of rotation (30, 30') with respect to a stator of the vacuum pump (10) or of the rotation unit (26) by means of at least one magnetic bearing (44), in particular a permanent magnetic bearing,
**characterized in that**,
in the method, an imbalance of the rotor (16) is measured in at least one plane (E2) outside the plane (E3) of the magnetic bearing (44) and the imbalance is at least approximately eliminated in the plane (E2) outside the magnetic bearing plane (E3) by removing material from the rotor (16) by means of laser radiation.

2. A method in accordance with claim 1,
**characterized in that**
the material is removed while the rotor (16) rotates, preferably during or subsequent to the imbalance measurement.

3. A method in accordance with claim 1 or claim 2,
**characterized in that**
the method further comprises the steps:
measuring an imbalance of the rotor (16) in the plane (E3) of the magnetic bearing (44), and
adjusting the position of the axis of rotation (30, 30') in dependence on the imbalance measured in the plane (E3) of the magnetic bearing (44).

4. A method in accordance with claim 3,
**characterized in that**
the magnetic bearing (44) is changed, in particular with respect to its shape and/or its material-specific magnetic properties, in dependence on a deviation (Δρ) of the position of the axis of rotation (30, 30') from the position of the main axis of inertia (80),
with, preferably, the deviation (Δρ) being determined by amount and direction.

5. A method in accordance with claim 3 or claim 4,
**characterized in that**,
to adjust the position of the axis of rotation (30, 30'), material is removed from at least one permanent magnet (48, 52) of the magnetic bearing (44), in particular by a cutting process which is preferably selected from the group composed of grinding, drilling, milling and turning.

6. A method in accordance with any one of the claims 3 to 5,
**characterized in that**,
to adjust the position of the axis of rotation (30, 30'), at least one permanent magnet (48, 52) of the magnetic bearing (44) is at least partly demagnetized at least in one region (74).

7. A method in accordance with claim 6,
**characterized in that**
the region (74) is demagnetized by heating to a temperature above which the permanent magnet (48, 52) permanently loses its magnetic properties at least in part; and/or
**in that** the region (74) is heated by irradiation with laser radiation.

8. A method in accordance with any one of the claims 3 to 7,
**characterized in that**
the position of the axis of rotation (30, 30') and/or the position of the main axis of inertia (80), in particular in the magnetic bearing plane (E3), is/are determined before the adjustment, with, preferably, the position of the main axis of inertia (80) being determined in dependence on the measured imbalance.

9. A vacuum pump (10), in particular a turbomolecular pump, or a rotation unit (26) for a vacuum pump (10), in particular for a turbomolecular pump, having a rotor (16) which is rotatably supported about an axis of rotation (30, 30') with respect to a stator of the vacuum pump (10) or of the rotation unit (26) by means of at least one magnetic bearing (44), in particular a permanent magnetic bearing,
wherein the position of the axis of rotation (30, 30') was adjusted such that the axis of rotation (30, 30') is at least approximately brought into alignment with the main axis of inertia (80) of the rotor (16) at least in the plane (E3) of the magnetic bearing (44),
**characterized in that**
an imbalance of the rotor (16) is at least approximately eliminated in at least one plane (E2) outside the plane (E3) of the magnetic bearing (44) by removing material from the rotor (16) by means of laser radiation, and
material is removed from the magnetic bearing (44), in particular from at least one rotor ring (52) and/or from at least one stator ring (48);
and/or **in that**
an imbalance of the rotor (16) is at least approximately eliminated in at least one plane (E2) outside the plane (E3) of the magnetic bearing (44) by removing material from the rotor (16) by means of laser radiation, wherein the magnetic bearing (44), in particular at least one rotor ring (52) and/or at least one stator ring (48) having a permanent magnetic material, has been heated at least in one region (74) to a temperature above which the material of the magnetic bearing (44) permanently loses its magnetic properties at least in part;
and/or **in that**
an imbalance of the rotor (16) is at least approximately eliminated in at least one plane (E2) outside the plane (E3) of the magnetic bearing (44) by removing material from the rotor (16) by means of laser radiation, wherein the shape and/or the material-specific magnetic properties was/were changed in a region of the rotor-side part (50) of the bearing (44), in particular of at least one rotor ring (52), and/or of at least one stator-side part (46) of the bearing (44), in particular of at least one stator ring (48), which region forms a surface facing toward the respective other part (46, 50) of the bearing (44);
and/or **in that**
an imbalance of the rotor (16) is at least approximately eliminated in at least one plane (E2) outside the plane (E3) of the magnetic bearing (44) by removing material from the rotor (16) by means of laser radiation, wherein the shape and/or the material-specific magnetic properties was/were changed in a region of the rotor-side part (50) of the bearing (44), in particular of at least one rotor ring, which region forms a surface facing away from the stator-side part (46) of the bearing (44).

10. An apparatus for balancing a rotor (16) of a vacuum pump (10) or a rotation unit (26) for a vacuum pump (10) that is configured and adapted to carry out a method in accordance with any one of the claims 1 to 8.

## Revendications

1. Procédé d'équilibrage d'un rotor (16) d'une pompe à vide (10), en particulier d'une pompe turbomoléculaire, ou d'un rotor (16) d'une unité rotative (26) pour une pompe à vide (10), en particulier pour une pompe turbomoléculaire,
le rotor (16) étant monté de façon mobile en rotation autour d'un axe de rotation (30, 30') par rapport à un stator de la pompe à vide (10) ou de l'unité rotative (26) au moyen d'au moins un palier magnétique (44), en particulier un palier à aimant permanent,
**caractérisé en ce que**
lors du procédé, un balourd du rotor (16) est mesuré dans au moins un plan (E2) à l'extérieur du plan (E3) du palier magnétique (44), et le balourd est éliminé au moins approximativement par enlèvement de matière du rotor (16) par rayonnement laser dans le plan (E2) à l'extérieur du plan (E3) du palier magnétique.

2. Procédé selon la revendication 1,
**caractérisé en ce que**
la matière est enlevée pendant que le rotor (16) tourne, de préférence pendant ou à la suite de la mesure du balourd.

3. Procédé selon la revendication 1 ou 2,
**caractérisé en ce que**
le procédé comprend en outre les étapes consistant à :
mesurer un balourd du rotor (16) dans le plan (E3) du palier magnétique (44), et
régler la position de l'axe de rotation (30, 30') en fonction du balourd mesuré dans le plan (E3) du palier magnétique (44).

4. Procédé selon la revendication 3,
**caractérisé en ce que**
le palier magnétique (44) est modifié, en particulier en ce qui concerne sa forme et/ou ses propriétés magnétiques spécifiques au matériau, en fonction d'un écart (Δρ) entre la position de l'axe de rotation (30, 30') et la position de l'axe d'inertie principale (80),
de préférence, l'écart (Δρ) étant déterminé en valeur absolue et en direction.

5. Procédé selon la revendication 3 ou 4,
**caractérisé en ce que**
pour régler la position de l'axe de rotation (30, 30'), de la matière est enlevée d'au moins un aimant permanent (48, 52) du palier magnétique (44), en particulier par un procédé d'enlèvement de copeaux, qui est de préférence choisi dans le groupe comprenant le meulage, le perçage, le fraisage et le tournage.

6. Procédé selon l'une des revendications 3 à 5,
**caractérisé en ce que**
pour régler la position de l'axe de rotation (30, 30'), au moins un aimant permanent (48, 52) du palier magnétique (44) est au moins partiellement démagnétisé dans une zone (74).

7. Procédé selon la revendication 6,
**caractérisé en ce que**
la zone (74) est démagnétisée par chauffage à une température au-dessus de laquelle l'aimant permanent (48, 52) perd durablement au moins partiellement ses propriétés magnétiques, et/ou
la zone (74) est chauffée par irradiation au rayonnement laser.

8. Procédé selon l'une des revendications 3 à 7,
**caractérisé en ce que**
la position de l'axe de rotation (30, 30') et/ou la position de l'axe d'inertie principale (80), en particulier dans le plan (E3) du palier magnétique, sont déterminées avant le réglage, sachant que, de préférence, la position de l'axe d'inertie principale (80) est déterminée en fonction du balourd mesuré.

9. Pompe à vide (10), en particulier pompe turbomoléculaire, ou unité rotative (26) pour une pompe à vide (10), en particulier pour une pompe turbomoléculaire, comprenant un rotor (16)
monté de façon mobile en rotation autour d'un axe de rotation (30, 30') par rapport à un stator de la pompe à vide (10) ou de l'unité rotative (26) au moyen d'au moins un palier magnétique (44), en particulier un palier à aimant permanent,
la position de l'axe de rotation (30, 30') ayant été réglée de telle sorte que l'axe de rotation (30, 30') soit amené à coïncider au moins approximativement avec l'axe d'inertie principale (80) du rotor (16), au moins dans le plan (E3) du palier magnétique (44),
**caractérisée en ce que**
un balourd du rotor (16) dans au moins un plan (E2) à l'extérieur du plan (E3) du palier magnétique (44) est au moins approximativement éliminé par enlèvement de matière du rotor (16) par rayonnement laser, et
de la matière est enlevée du palier magnétique (44), en particulier d'au moins une bague de rotor (52) et/ou d'au moins une bague de stator (48), et/ou **en ce que**
un balourd du rotor (16) dans au moins un plan (E2) à l'extérieur du plan (E3) du palier magnétique (44) est au moins approximativement éliminé par enlèvement de matière du rotor (16) par rayonnement laser, le palier magnétique (44), en particulier au moins une bague de rotor (52) et/ou au moins une bague de stator (48) avec un matériau magnétique permanent, a été chauffé au moins dans une zone (74) à une température au-dessus de laquelle le matériau du palier magnétique (44) perd durablement au moins partiellement ses propriétés magnétiques permanentes,
et/ou **en ce que**
un balourd du rotor (16) dans au moins un plan (E2) à l'extérieur du plan (E3) du palier magnétique (44) est au moins approximativement éliminé par enlèvement de matière du rotor (16) par rayonnement laser, sachant que la forme et/ou les propriétés magnétiques spécifiques au matériau ont été modifiées dans une zone de la partie (50) du palier (44) située du côté du rotor, en particulier d'au moins une bague de rotor (52), et/ou d'au moins une partie (46) du palier (44) située du côté du stator, en particulier d'au moins une bague de stator (48), qui forme une surface tournée vers l'autre partie (46, 50) respective du palier (44),
et/ou **en ce que**
un balourd du rotor (16) dans au moins un plan (E2) à l'extérieur du plan (E3) du palier magnétique (44) est au moins approximativement éliminé par enlèvement de matière du rotor (16) par rayonnement laser, sachant que la forme et/ou les propriétés magnétiques spécifiques au matériau ont été modifiées dans une zone de la partie (50) du palier (44) située du côté du rotor, en particulier d'au moins une bague de rotor, qui forme une surface détournée de la partie (46) du palier (44) située du côté du stator.

10. Dispositif d'équilibrage d'un rotor (16) d'une pompe à vide (10) ou d'une unité rotative (26) pour une pompe à vide (10), qui est conçu et réalisé pour mettre en oeuvre un procédé selon l'une des revendications 1 à 8.
